# EUROPÄISCHE PATENTSCHRIFT

(11) **EP 1 307 640 B1**
(45) Veröffentlichungstag und Bekanntmachung des Hinweises auf die Patenterteilung: **14.06.2006**
(21) Anmeldenummer: 01956311.3
(22) Anmeldetag: 11.07.2001
(51) Int. Cl.: F01N 9/00, F02D 41/02

(54) **VERFAHREN ZUM BETREIBEN EINES STICKOXID (NOx)-SPEICHERKATALYSATORS**
METHOD FOR OPERATING A NITROGEN OXIDE (NOX) STORAGE CATALYST
PROCEDE DE FONCTIONNEMENT D'UN CATALYSEUR ACCUMULATEUR D'OXYDES D'AZOTE (NOX)

(30) Priorität: 26.07.2000 DE 10036406
(43) Veröffentlichungstag der Anmeldung: 07.05.2003
(73) Patentinhaber: ROBERT BOSCH GMBH, 70442 Stuttgart (DE)
(72) Erfinder: SCHNAIBEL, Eberhard, 71282 Hemmingen (DE); WINKLER, Klaus, 71277 Rutesheim (DE)
(86) Internationale Anmeldenummer: PCT/DE2001/002595
(87) Internationale Veröffentlichungsnummer: WO 2002/008584

(56) Entgegenhaltungen:
- EP-A- 0 560 991
- EP-A- 0 733 786
- EP-A- 0 735 250
- EP-A- 0 867 604

## Beschreibung

Die vorliegende Erfindung betrifft ein Verfahren zum Betreiben eines Stickoxid (=NOx)-Speicherkatalysators einer Brennkraftmaschine insbesondere eines Kraftfahrzeugs. Dabei werden während einer ersten Betriebsphase des Speicherkatalysators Stickoxide in dem Speicherkatalysator eingespeichert und während einer zweiten Betriebsphase eingespeicherte Stickoxide aus dem Speicherkatalysator ausgespeichert. Während der ersten Betriebsphase wird die eingespeicherte Menge an Stickoxiden und während der zweiten Betriebsphase eine die ausgespeicherte Menge an Stickoxiden charakterisierende Größe ermittelt und mit der während der ersten Betriebsphase ermittelten eingespeicherten Menge an Stickoxiden verglichen.

Die vorliegende Erfindung betrifft außerdem ein Steuergerät für eine Brennkraftmaschine insbesondere eines Kraftfahrzeugs. Die Brennkraftmaschine weist einen Stickoxid (NOx)-Speicherkatalysator auf, in den während einer ersten Betriebsphase Stickoxide einspeicherbar und während einer zweiten Betriebsphase eingespeicherte Stickoxide ausspeicherbar sind. Das Steuergerät weist erste Mittel zum Ermitteln der während der ersten Betriebsphase eingespeicherten Menge an Stickoxiden, zweite Mittel zum Ermitteln einer die während der zweiten Betriebsphase ausgespeicherte Menge an Stickoxiden charakterisierenden Größe und dritte Mittel zum Vergleich der während der ersten Betriebsphase ermittelten eingespeicherten Menge an Stickoxiden mit der ermittelten Größe auf.

Des Weiteren betrifft die vorliegende Erfindung ein solches Steuergerät mit einem Steuerelement, insbesondere ein Read-Only-Memory oder ein Flash-Memory.

Schließlich betrifft die vorliegende Erfindung auch eine Brennkraftmaschine mit einem solchen Steuergerät.

### Stand der Technik

Die EP 0 735 250 A1 beschreibt ein Verfahren zum Betreiben eines Stickoxid (NOx)-Speicherkatalysators einer Brennkraftmaschine gemäß dem Oberbegriff des Patentanspruchs 1. Bei diesem Verfahren wird ein Korrekturfaktor zur Ermittlung der während der ersten Betriebsphase eingespeicherten Menge an NOx berechnet.

Aus der EP 0 560 991 B1 ist die Verwendung eines NOx-Speicherkatalysators zum Speichern von Stickoxiden bekannt, die von einer Brennkraftmaschine in einem mageren Betrieb (mageres Kraftstoff/Luft-Gemisch; Lambda > 1) emittiert werden.

Aus der DE 24 44 334 ist es bekannt, die Ausgangssignale einer vor und einer hinter dem Katalysator angeordneten sauerstoffempfindlichen Abgassonde zur Beurteilung eines 3-Wege-Katalysators im Rahmen einer On-Board-Diagnose heranzuziehen. Das bekannte Verfahren basiert auf der Sauerstoffspeicherfähigkeit eines funktionsfähigen 3-Wege-Katalysators. Die DE 24 44 334 offenbart in diesem Zusammenhang eine Veränderung der Kraftstoff/Luft-Gemischzusammensetzung von Lambda = 0,95 (fettes, kraftstoffreiches Gemisch; Sauerstoffmangel) zu Lambda = 1,05 (mageres, kraftstoffarmes Gemisch; Sauerstoffüberschuss). Der vor dem Katalysator angeordnete Abgassensor reagiert auf eine Veränderung der Kraftstoff/Luft-Gemischzusammensetzung nahezu verzögerungslos. Der nach dem Katalysator angeordnete Abgassensor reagiert jedoch erst nach einer von der Sauerstoffspeicherfähigkeit des Katalysators abhängigen Zeitspanne. Das hat seine Ursache darin, dass aufgrund des bei Lambda = 0,95 herrschenden Sauerstoffmangels im Abgas die Sauerstoffspeicherplätze des Katalysators zunächst nicht besetzt sind. Nach dem Umschalten auf Magerbetrieb (Sauerstoffüberschuss) vor dem Katalysator werden die Sauerstoffspeicherplätze sukzessive belegt. Hinter dem Katalysator herrscht daher nach der Veränderung der Gemischzusammensetzung zunächst weiterhin Sauerstoffmangel. Erst wenn die Sauerstoffspeicherplätze belegt sind, tritt langsam auch hinter dem Katalysator ein Sauerstoffüberschuss auf, der zu einer Änderung des Ausgangssignals des hinteren Abgassensors führt. Der Zeitverzug, d.h. die Phasenverschiebung zwischen den Reaktionen beider Abgassensoren, kann zur Beurteilung der Sauerstoffspeicherfähigkeit zur Diagnose des Katalysators verwendet werden.

Brennkraftmaschinen mit Benzin-Direkteinspritzung bieten den Vorteil verringerter Kohlendioxid (CO2)-Emissionen. Da diese Brennkraftmaschinen überwiegend mit magerem Kraftstoff/Luft-Gemisch (Lambda > 1) betrieben werden, sind sie mit einem Stickoxid (NOx)-Speicherkatalysator versehen, der die in der mageren Gemischphase entstehenden NOx-Emissionen einspeichert. Da benzindirekteinspritzende Brennkraftmaschinen auch bei Lambda = 1 (Homogenbetrieb) betrieben werden, weisen die NOx-Speicherkatalysatoren in der Regel auch eine Speicherfähigkeit für Sauerstoff auf. Zur Speicherung von Sauerstoff kann bspw. ein herkömmlicher 3-Wege-Katalysator eingesetzt werden.

Da die Speicherfähigkeit eines Katalysators an Stickoxiden und Sauerstoff beschränkt ist, muss der Katalysator von Zeit zu Zeit regeneriert werden. Während der Ausspeicherphase wird ein Reduktionsmittel zu dem Abgas hinzugegeben, durch das die gespeicherten Stickoxide zu Sauerstoff und Stickstoff reduziert werden. Das Reduktionsmittel ist bspw. als Kohlenwasserstoff (HC) und Kohlenmonoxid (CO) ausgebildet, die durch eine fette Gemischeinstellung in das Abgas vor dem Katalysator gegeben werden können. Alternativ kann als Reduktionsmittel auch Harnstoff zu dem Abgas hinzugegeben werden. Dabei wird zur Reduktion des Stickoxids zu Sauerstoff und Stickstoff Amoniak aus dem Harnstoff verwendet. Der Amoniak kann per Hydrolyse aus einer Harnstofflösung gewonnen werden.

Die Zeitpunkte für Beginn und Ende der Ausspeicherphase sind wichtig für die hinter dem Katalysator in die Umwelt ausgestoßenen Emissionen. Während eines Magerbetriebs der Brennkraftmaschine wird sowohl der NOx Speicherkatalysator mit Stickoxiden als auch der 3-Wege-Katalysator mit Sauerstoff gefüllt. Der Beginn der Ausspeicherphase wird über ein NOx-Einspeichermodell festgelegt. Dieses modelliert die in den NOx-Speicherkatalysator eingebrachte Stickoxidmenge und modelliert so dessen NOx-Füllstand. Überschreitet die modellierte Größe eine vorgebbare Schwelle, wird eine Ausspeicherphase eingeleitet.

Aus der DE 198 01 625 A1 ist es bekannt, die Ausspeicherphase zu beenden, wenn ein Ausgangssignal eines hinter dem Katalysator angeordneten Abgassensors einen vorgebbaren Schwellenwert überschreitet. Aufgrund von Fertigungstoleranzen, Alterungserscheinungen und Temperaturschwankungen kann es jedoch zu Schwankungen des Ausgangssignals des hinteren Abgassensors kommen, was zu einem zu frühen oder zu späten Beenden der Ausspeicherphase führen kann. Die Folge sind eine unzureichende Ausnutzung der maximalen Speicherfähigkeit des Katalysators aufgrund eines zu frühen Endes Ausspeicherphase oder eine hohe Abgasemissionen, insbesondere eine Emission des Reduktionsmittels, bei einem zu späten Ende der Ausspeicherphase.

Der vorliegenden Erfindung liegt deshalb die Aufgabe zugrunde, den Anfang und das Ende der zweiten Betriebsphase (Ausspeicherphase) und insbesondere die von einem dem Speicherkatalysator nachgeordneten Abgassensor gemessene Menge an Stickoxiden möglichst genau und zuverlässig ermitteln zu können.

Zur Lösung dieser Aufgabe schlägt die Erfindung ausgehend von dem Verfahren der eingangs genannten Art vor, dass mit Hilfe der während der zweiten Betriebsphase ermittelten Größe ein Abgleich eines dem Speicherkatalysator nachgeordneten Abgassensors ausgeführt wird.

Die während der zweiten Betriebsphase ausgespeicherte Menge an Stickoxiden entspricht im Idealfall dem in der ersten Betriebsphase ermittelten NOx-Speicherinhalt des NOx-Speicherkatalysators. Während der ersten Betriebsphase kann der NOx-Speicherinhalt bspw. über ein NOx-Einspeichermodell ermittelt werden. Die während der zweiten Betriebsphase ermittelte, die ausgespeicherte Menge an Stickoxiden charakterisierende Größe wird mit dem ermittelten NOx-Speicherinhalt verglichen und kann bspw. für eine Plausibilitätsprüfung der während der ersten Betriebsphase ermittelten eingespeicherten Menge an Stickoxiden bzw. zur Diagnose des NOx-Speicherkatalysators herangezogen werden.

Gemäß dem erfindungsgemäßen Verfahren wird also der NOx-Speicherinhalt des NOx-Speicherkatalysators bzw. eine mit dem NOx-Speicherinhalt in Bezug stehende Größe auf zwei voneinander unabhängige Weisen bestimmt. Die beiden auf unterschiedliche Weisen ermittelten Werte für den NOx-Speicherinhalt werden miteinander verglichen und zur Erhöhung der Genauigkeit der Ermittlung des NOx-Speicherinhalts herangezogen. Auf diese Weise können auch der Beginn und das Ende der zweiten Betriebsphase wesentlich genauer ermittelt werden.

Erfindungsgemäß wird die während der ersten Betriebsphase eingespeicherte Menge an Stickoxiden mit Hilfe eines dem Speicherkatalysator nachgeordneten Abgassensors ermittelt und mit Hilfe der während der zweiten Betriebsphase ermittelten Größe ein Abgleich des Abgassensors ausgeführt. Es wird vorgeschlagen, dass zum Abgleich des Abgassensors die Steigung der Kennlinie des Abgassensors variiert wird. Der Abgassensor kann als ein Stickoxid (NOx)-Sensor und/oder als ein Sauerstoff (02)-Sensor ausgebildet sein. Durch einen Abgleich des Abgassensors kann sowohl der Anfang als auch das Ende der Ausspeicherphase besonders genau ermittelt werden. Dadurch kann einerseits die volle Speicherkapazität des NOx-Speicherkatalysators ausgeschöpft und andererseits eine besonders geringe Schadstoffemission hinter dem Katalysator erzielt werden.

Gemäß einer vorteilhaften Weiterbildung der vorliegenden Erfindung wird vorgeschlagen, dass die Stickoxide mit Hilfe eines Reduktionsmittels aus dem Speicherkatalysator ausgespeichert werden und die während der zweiten Betriebsphase benötigte Menge an Reduktionsmittel als die die ausgespeicherte Menge an Stickoxiden charakterisierende Größe ermittelt wird.

Gemäß einer bevorzugten Ausführungsform der vorliegenden Erfindung wird vorgeschlagen, dass die während der zweiten Betriebsphase benötigte Menge an Reduktionsmittel durch eine Integration eines Reduktionsmittelstroms über die Zeit ermittelt wird. Der Reduktionsmittelstrom wird vorteilhafterweise aus einem Luftmassenstrom in einem Ansaugrohr der Brennkraftmaschine und aus einem Sauerstoffgehalt des Abgases vor dem Speicherkatalysator ermittelt. Der Luftmassenstrom kann bspw. mittels eines Luftmassensensors oder aus der Stellung einer in dem Ansaugrohr angeordneten Drosselklappe ermittelt werden. Die Stellung der Drosselklappe kann über ein Drosselklappen-Potentiometer bestimmt werden. Der Sauerstoffgehalt des Abgases vor dem Speicherkatalysator kann bspw. mittels einer herkömmlichen Lambda-Sonde oder aber aus einem modellierten Lambda-Sollwert ermittelt werden.

Es wird des Weiteren vorgeschlagen, dass die Integration durch einen Abfall des Sauerstoffgehalts des Abgases vor dem Speicherkatalysator von magerem auf fettes Kraftstoff/Luft-Gemisch begonnen wird. Der Abfall des Sauerstoffgehalts des Abgases kann bspw. mittels einer in einem Abgasrohr vor dem Speicherkatalysator angeordneten Lambda-Sonde detektiert oder aus einem modellierten Lambda-Sollwert ermittelt werden. Ein Abfall des Sauerstoffgehalts des Abgases ist ein Anszichen dafür, dass die Brennkraftmaschine von Magerbetrieb auf einen Betrieb mit einem fetten Kraftstoff/Luft-Gemisch umgeschaltet worden ist, d.h. dass die zweite Betriebsphase (Ausspeicherphase bzw. Regenerationsphase) eingeleitet worden ist.

Vorteilhafterweise wird die Integration durch einen Abfall des Sauerstoffgehalts des Abgases nach dem Speicherkatalysator von magerem auf fettes Kraftstoff/Luft-Gemisch beendet. Der Abfall des Sauerstoffgehalts des Abgases kann bspw. mittels eines in dem Abgasrohr nach dem Speicherkatalysator angeordneten sauerstoffempfindlichen NOx-Sensors oder eines gesonderten 02-Sensors detektiert werden. Ein Abfall des Sauerstoffgehalts des Abgases nach dem Speicherkatalysator ist ein Anzeichen dafür, dass die zweite Betriebsphase beendet ist, d.h. dass das gesamte Stickoxid aus dem NOx-Speicherkatalysator regeneriert worden ist.

Die während der zweiten Betriebsphase für die Reduktion des NOx-Speicherkatalysators notwendige Menge am Reduktionsmittel entspricht im Idealfall genau dem NOx-Speicherinhalt der vorangegangenen Einspeicherphase und damit dem Wert der Masse an Stickoxiden in dem NOx-Speicher am Ende der letzten Einspeicherphase. Der mittels NOx-Einspeichermodell ermittelte und durch den NOx-Sensor eingeregelte NOx-Speicherinhalt des Speicherkatalysators wird nun mit dem Wert der benötigten Menge an Reduktionsmittel verglichen und plausibilisiert. Eine Abweichung des NOx-Speicherinhalts von der unabhängig davon ermittelten Menge an Reduktionsmittel kann zum Abgleich des Ausgangssignals des NOx-Sensors, d.h. zum Anpassen der Steigung des Ausgangssignals, herangezogen werden,

Von besonderer Bedeutung ist die Realisierung des erfindungsgemäßen Verfahrens in Form eines Steuerelements, das für ein Steuergerät einer Brennkraftmaschine insbesondere eines Kraftfahrzeugs vorgesehen ist. Dabei ist auf dem Steuerelement ein Programm abgespeichert, das auf einem Rechengerät, insbesondere auf einem Mikroprozessor, ablauffähig und zur Ausführung sämtlicher Schritte des erfindungsgemäßen Verfahrens programmiert ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, bspw. ein Read-Only-Memory oder ein Flash-Memory.

Als eine weitere Lösung der Aufgabe der vorliegenden Erfindung wird ausgehend von dem Steuergerät der eingangs genannten Art vorgeschlagen, dass das Steuergerät Mittel zum Abgleich eines dem Speicherkatalysator nachgeordneten Abgassensors mit Hilfe der während der zweiten Betriebsphase ermittelten Größe aufweist.

Die Mittel zum Abgleich des Abgassensors sind vorzugsweise als ein Computerprogramm ausgebildet, das auf einem Rechengerät, insbesondere auf einem Mikroprozessor, des Steuergeräts ablauffähig und zur Ausführung sämtlicher Schritte des erfindungsgemäßen Verfahrens programmiert ist.

Schließlich wird zur Lösung der Aufgabe der vorliegenden Erfindung ausgehend von der Brennkraftmaschine der eingangs genannten Art vorgeschlagen, dass die Brennkraftmaschine ein erfindungsgemäßes Steuergerät aufweist. Es wird vorgeschlagen, dass die ersten Mittel einen dem Speicherkatalysator nachgeordneten Abgassensor umfassen, wobei die Brennkraftmaschine Mittel zum Abgleich des Abgassensors mit Hilfe der ermittelten Größe aufweist.

Gemäß einer vorteilhaften Weiterbildung der vorliegenden Erfindung wird vorgeschlagen, dass der Abgassensor als ein Stickoxid (NOx)-Sensor ausgebildet ist.

Gemäß einer bevorzugten Ausführungsform der vorliegenden Erfindung wird vorgeschlagen, dass die zweite Mittel einen Integrator zum Ermitteln einer während der zweiten Betriebsphase benötigten Menge an Reduktionsmittel durch Aufintegrieren eines Reduktionsmittelstroms über die Zeit umfassen.

Vorteilhafterweise weist die Brennkraftmaschine einen Luftmassensensor oder Mittel zum Erfassen der Stellung einer in einem Ansaugrohr angeordneten Drosselklappe zum Ermitteln eines Luftmassenstroms und einen vor dem Speicherkatalysator angeordneten Sauerstoff (O2)-Sensor zum Erfassen des Sauerstoffgehalts des Abgases auf, wobei der Reduktionsmittelstrom aus dem Luftmassenstrom und dem Sauerstoffgehalt des Abgases ermittelt wird. Der SauerstoffSensor ist bspw. als eine herkömmliche Lambda-Sonde ausgebildet.

Ein Abfall des Sauerstoffgehalts des Abgases vor dem Speicherkatalysator von magerem auf fettes Kraftstoff/Luft-Gemisch leitet vorteilhafterweise die Integration ein. Ein Abfall des Sauerstoffgehalts des Abgases nach dem Speicherkatalysator von magerem auf fettes Kraftstoff/Luft-Gemisch beendet vorteilhafterweise die Integration.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Es zeigen:
- Figur 1: ein schematisches Blockschaltbild einer erfindungsgemäßen Brennkraftmaschine gemäß einer bevorzugten Ausführungsform;
- Figur 2: ein Ablaufdiagramm eines erfindungsgemäßen Verfahrens; und
- Figur 3: ein schematisches Blockschaltbild der zweiten Mittel eines erfindungsgemäßen Steuergeräts.

### Beschreibung der Ausführungsbeispiele

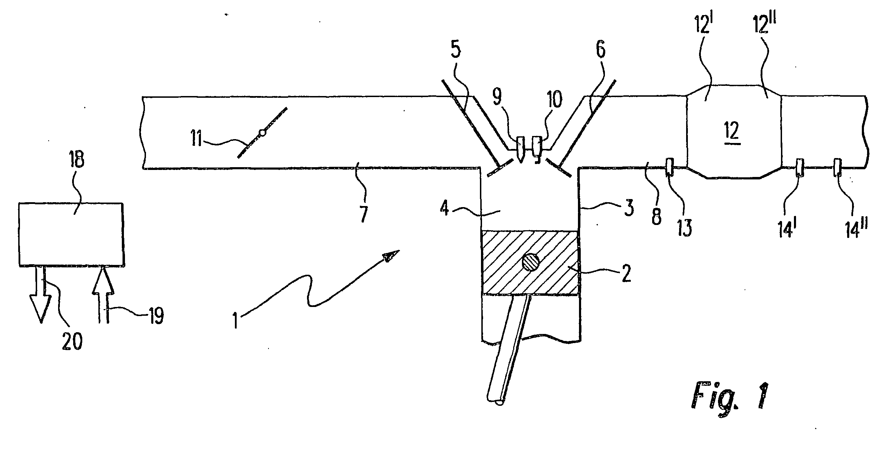

In Figur 1 ist eine direkteinspritzende Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der u.a. durch den Kolben 2, ein Einlassventil 5 und ein Auslassventil 6 begrenzt ist. Mit dem Einlassventil 5 ist ein Ansaugrohr 7 und mit dem Auslassventil 6 ein Abgasrohr 8 gekoppelt.

Im Bereich des Einlassventils 5 und des Auslassventils 6 ragen ein Kraftstoffeinspritzventil 9 und eine Zündkerze 10 in dem Brennraum 4. Über das Einspritzventil 9 kann Kraftstoff in dem Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der die durch die Verbrennung des Kraftstoffs entstehenden Abgase reinigt. Bei dem Katalysator 12 handelt es sich um einen Stickoxid (NOx)-Speicherkatalysator 12', der mit einem 3-Wege-Katalysator 12" als Sauerstoffspeicher gekoppelt ist.

Ein Steuergerät 18 ist von Eingangssignalen 19 beaufschlagt, die mittels Sensoren gemessene Betriebsgrößen der Brennkraftmaschine 1 darstellen. Das Steuergerät 18 erzeugt Ausgangssignale 20, mit denen über Aktoren bzw. Steller das Verhalten der Brennkraftmaschine 1 beeinflusst werden kann. Unter anderem ist das Steuergerät 18 dazu vorgesehen, die Betriebsgrößen der Brennkraftmaschine 1 zu steuern und/oder zu regeln. Zu diesem Zweck ist das Steuergerät 18 mit einem Mikroprozessor versehen, der in einem Speichermedium, insbesondere in einem Flash-Memory, ein Programm abgespeichert hat, das dazu geeignet ist, die genannte Steuerung und/oder Regelung durchzuführen.

In einer ersten Betriebsart, einem sogenannten Homogenbetrieb der Brennkraftmaschine 1, wird die Drosselklappe 11 in Abhängigkeit von dem erwünschten Drehmoment teilweise geöffnet bzw. geschlossen. Der Kraftstoff wird von dem Einspritzventil 9 während einer durch den Kolben 2 hervorgerufenen Ansaugphase in den Brennraum 4 eingespritzt. Durch die gleichzeitig über die Drosselklappe 11 angesaugte Luft wird der eingespritzte Kraftstoff verwirbelt und damit in dem Brennraum 4 im Wesentlichen gleichmäßig verteilt. Danach wird das Kraftstoff Luft-Gemisch während der Verdichtungsphase verdichtet, um dann von der Zündkerze 10 entzündet zu werden. Durch die Ausdehnung des entzündeten Kraftstoffs wird der Kolben 2 angetrieben. Das entstehende Drehmoment hängt im Homogenbetrieb u.a. von der Stellung der Drosselklappe 11 ab. Im Hinblick auf eine geringe Schädstofentwicklung wird das Kraftstoff Luft-Gemisch möglichst auf Lambda=1 eingestellt.

In einer zweiten Betriebsart, einem sogenannten Schichtbetrieb der Brennkraftmaschine 1, wird die Drosselklappe 11 weit geöffnet. Der Kraftstoff wird von dem Einspritzventil 9 während einer durch den Kolben 2 hervorgerufenen Verdichtungsphase in den Brennraum 4 eingespritzt, und zwar örtlich in die unmittelbare Umgebung der Zündkerze 10 sowie zeitlich in geeignetem Abstand vor dem Zündzeitpunkt. Dann wir mit Hilfe der Zündkerze 10 der Kraftstoff entzündet, so dass der Kolben 2 in der nunmehr folgenden Arbeitsphase durch die Ausdehnung des entzündeten Kraftstoffs angetrieben wird. Das entstehende Drehmoment hängt im Schichtbetrieb weitgehend von der eingespritzten Kraftstoffmasse ab. Im Wesentlichen ist der Schichtbetrieb für den Leerlaufbetrieb und den Teillastbetrieb der Brennkraftmaschine 1 vorgesehen. Im Schichtbetrieb ist Lambda üblicherweise > 1.

Während des Schichtbetriebs wird der Speicherkatalysator 12' mit Stickoxiden und der 3-Wege-Katalysator 12" mit Sauerstoff beladen (Einspeicherphase). In einer Regenerationsphase werden der Speicherkatalysator 12' und der 3-Wege-Katalysator 12" wieder entladen, so dass sie in einem nachfolgenden Schichtbetrieb erneut Stickoxide bzw. Sauerstoff aufnehmen können (Ausspeicherphase). Während der Regenerationsphase wird vor dem Katalysator 12 ein Reduktionsmittel in das Abgas gegeben. Als Reduktionsmittel können bspw. Kohlenwasserstoffe (HC), Kohlenmonoxid (CO) oder Harnstoff verwendet werden. Kohlenwasserstoffe und Kohlenmonoxid werden im Abgas durch eine fette Gemischeinstellung (Betrieb der Brennkraftmaschine im Homogenbetrieb) erzeugt. Harnstoff kann aus einem Vorratsbehälter dem Abgas gesteuert zudosiert werden. Während der Regenerationsphase des Katalysators 12 laufen folgende Prozesse ab: Das Reduktionsmittel reduziert die gespeicherten Stickoxide zu Stickstoff und Sauerstoff. Diese Stoffe treten aus dem Katalysator 12 heraus, so dass sich hinter dem Katalysator 12 während der Regenerationsphase ein Sauerstoffüberschuss ergibt, obwohl die Brennkraftmaschine 1 mit einem fetten Kraftstoff/Luft-Gemisch (Sauerstoffmangel) betrieben wird.

Vor dem Katalysator 12 ist ein Sauerstoff (O2) -Sensor 13 und nach dem Katalysator 12 ein Stickstoff (NOx)-Sensor 14' und ein weiterer Sauerstoff (O2)-Sensor 14'' in dem Abgasrohr 8 angeordnet. Nach dem Umschalten auf Sauerstoffmangel (Betrieb der Brennkraftmaschine 1 mit fettem Gemisch) vor dem Katalysator 12 zu Beginn der Regenerationsphase reagiert der O2-Sensor 13 praktisch verzögerungslos. Aufgrund des während des Schichtbetriebs vorherrschenden Sauerstoffüberschusses in dem Abgas sind die Sauerstoffspeicherplätze des Katalysators 12 zunächst nahezu alle besetzt. Nach dem Umschalten auf Sauerstoffmangel zu Beginn der Regenerationsphase werden die Sauerstoffspeicherplätze sukzessive von Sauerstoff befreit, der dann aus dem Katalysator 12 heraustritt. Hinter dem Katalysator 12 herrscht daher nach dem Umschalten in die Regeneratonsphase zunächst weiter Sauerstoffüberschuss. Nach einer von der Sauerstoffspeicherfähigkeit des Katalysators 12 abhängigen Zeitspanne ist das gesamte in dem Speicherkatalysator 12' eingespeicherte Stickoxid reduziert und der gesamte in dem Sauerstoffspeicher 12" eingespeicherte Sauerstoff entfernt, so dass auch hinter dem Katalysator 12 Sauerstoffmangel auftritt, der eine Änderung des Ausgangssignals des hinteren O2-Sensors 14" bewirkt.

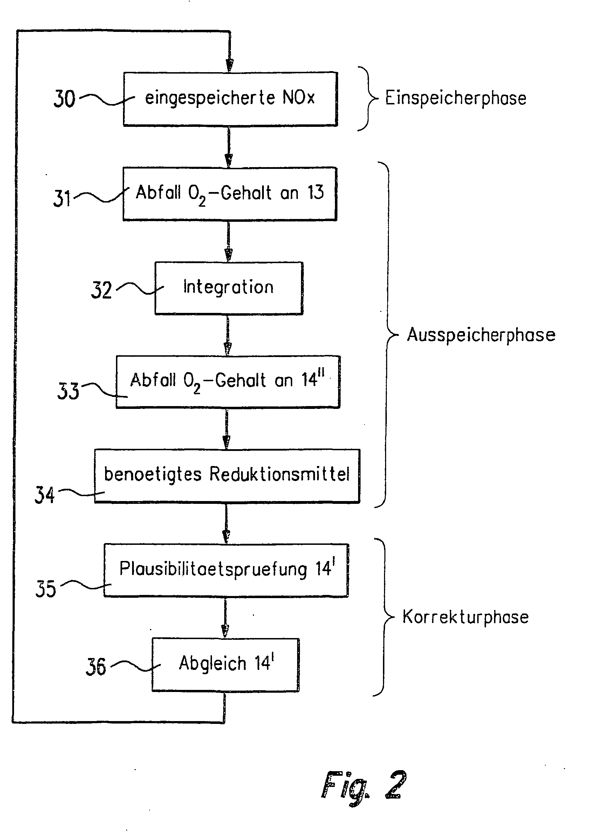

In Figur 2 ist ein Ablaufdiagramm des erfindungsgemäßen Verfahrens dargestellt. Es beginnt in einem Funktionsblock 30, in dem während eines Magerbetriebs der Brennkraftmaschine 1 Stickoxide in den Katalysator 12 eingespeichert werden (Einspeicherphase). Die Menge des während der ersten Betriebsphase in den Katalysator 12 eingespeicherten Stickoxids wird mit Hilfe eines NOx-Einspeichermodelles ermittelt. Unter Umständen erfolgt ein Abgleich des NOx-Einspeichermodelles durch den NOx-Sensor 14'.

Da die Speicherfähigkeit des Katalysators 12 an Stickoxiden und Sauerstoff beschränkt ist, muss der Katalysator 12 von Zeit zu Zeit regeneriert werden. Während der Regenerationsphase werden die in den Katalysator 12 eingespeicherten Stickoxide und der eingespeicherte Sauerstoff mit Hilfe von Reduktionsmitteln ausgespeichert (Ausspeicherphase). Während der Regenerationsphase wird die Brennkraftmaschine 1 mit einem fetten Kraftstoff/Luft-Gemisch betrieben. Der Abfall des Sauerstoffgehalts des Abgases vor dem Katalysator 12 von magerem auf fettes Kraftstoff/Luft-Gemisch wird in einem Funktionsblock 31 von dem O2-Sensor 13 nahezu verzögerungsfrei detektiert.

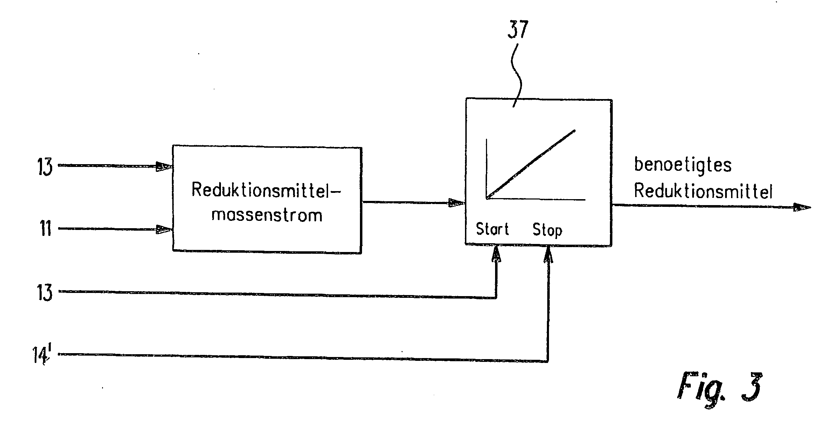

Wenn der O2-Sensor 13 von mager auf fett springt, wird ein Integrator 37 (vgl. Figur 3) gestartet, der einen Reduktionsmittelstrom über die Zeit auf integriert. Die Integration des Reduktionsmittelstroms über die Zeit erfolgt in Funktionsblock 32. Der Reduktionsmittelstrom wird aus einem Luftmassenstrom in dem Ansaugrohr 7 und dem Sauerstoffgehalt des Abgases vor dem Katalysator 12 ermittelt. Der Luftmassenstrom in dem Ansaugrohr 7 kann mittels eines Luftmassensensors (nicht dargestellt) oder durch Mittel zur Detektion der Stellung der Drosselklappe 11 bestimmt werden. Der Sauerstoffgehalt des Abgases vor dem Katalysator 12 wird durch den O2-Sensor 13 bestimmt.

Der Reduktionsmittelstrom wird so lange aufintegriert, bis in einem Funktionsblock 33 der hintere O2-Sensor 14" einen Abfall des Sauerstoffgehaltes des Abgases nach dem Katalysator 12 von magerem auf fettes Kraftstof/Luft-Gemisch detektiert. Das ist ein Anzeichen dafür, dass die Stickoxide in dem Katalysator 12 nahezu vollständig regeneriert sind. Wenn der O2-Sensor 14'' von mager auf fett springt, wird die Integration (Funktionsblock 32) beendet. Durch die Integration des Reduktionsmittelstroms wird die Menge an Reduktionsmittel ermittelt, die zur Regeneration des Katalysators 12 während der Ausspeicherphase benötigt wird (Funktionsblock 34).

Die im Rahmen der Ausspeicherphase benötigte Menge an Reduktionsmittel entspricht idealerweise dem Stickoxid-Speicherinhalt der vorangegangenen Einspeicherphase, der durch das NOx-Einspeichermodell ermittelt worden ist. Der mittels NOx-Einspeichermodell ermittelte und durch den NOx-Sensor 14' eingeregelte NOx-Speicherinhalt wird in Funktionsblock 35 auf Plausibilität überprüft. Dazu wird der Wert der Menge an eingespeichertem Stickoxid mit dem durch Integration ermittelten Wert der Menge an benötigtem Reduktionsmittel verglichen. Eine Abweichung des NOx-Speicherinhalts von der unabhängig ermittelten Menge an Reduktionsmittel wird des Weiteren in einem Funktionsblock 36 zum Abgleich des Ausgangssignals des NOx-Sensors 14' herangezogen. Dabei wird die Steigung des NOx-Sensors 14' überprüft und ggf. variiert.

Nch dem Funktionsblock 36 beginnt das erfindungsgemäße Verfahren wieder bei Funktionsblock 30, wo die Brennkraftmaschine 1 im Magerbetrieb betrieben wird. Das Verfahren lässt sich in verschiedene Phasen unterteilen, nämlich in die Einspeicherphase (Funktionsblock 30), die Ausspeicherphase (Funktionsblock 31 bis 34) und eine Korrekturphase mit Plausibilitätsprüfung (Funktionsblock 35) und Abgleich des NOx-Sensors 14' (Funktionsblock 36). Die verschiedenen Betriebsphasen der Brennkraftmaschine 1 werden nacheinander zyklisch durchlaufen, wobei die Korrekturphase im Verhältnis zu der Einspeicherphase und der Ausspeicherphase nur eine sehr geringe Zeit beansprucht.

## Patentansprüche

1. Verfahren zum Betreiben eines Stickoxid (NOx)-Speicherkatalysators (12') einer Brennkraftmaschine (1) insbesondere eines Kraftfahrzeugs, wobei während einer ersten Betriebsphase des Speicherkatalysators (12'), Stickoxide in dem Speicherkatalysator (12') eingespeichert und während einer zweiten Betriebsphase eingespeicherte Stickoxide aus dem Speicherkatalysator (12') ausgespeichert werden und wobei während der ersten Betriebsphase die eingespeicherte Menge an Stickoxiden ermittelt wird und während der zweiten Betriebsphase eine die ausgespeicherte Menge an Stickoxiden charakterisierende Größe ermittelt und mit der während der ersten Betriebsphase ermittelten eingespeicherten Menge an Stickoxiden verglichen wird, **dadurch gekennzeichnet, dass** mit Hilfe der während der zweiten Betriebsphase ermittelten Größe ein Abgleich eines dem Speicherkatalysator (12') nachgeordneten Abgassensors (14') ausgeführt wird.

2. Verfahren nach Anspruch 1, **dadurch gekennzeichnet, dass** die während der ersten Betriebsphase eingespeicherte Menge an Stickoxiden mit Hilfe des Abgassensors (14') ermittelt wird.

3. Verfahren nach Anspruch 1 oder 2, **dadurch gekennzeichnet, dass** zum Abgleich des Abgassensors (14') die Steigung der Kennlinie des Abgassensors (14') variiert wird.

4. Verfahren nach einem der Ansprüche 1 bis 3, **dadurch gekennzeichnet, dass** die Stickoxide mit Hilfe eines Reduktionsmittels aus dem Speicherkatalysator (12') ausgespeichert werden und die während der zweiten Betriebsphase benötigte Menge an Reduktionsmittel als die die ausgespeicherte Menge an Stickoxiden charakterisierende Größe ermittelt wird.

5. Verfahren nach Anspruch 4, **dadurch gekennzeichnet, dass** die während der zweiten Betriebsphase benötigte Menge an Reduktionsmittel durch eine Integration eines Reduktionsmittelstroms über die Zeit ermittelt wird.

6. Verfahren nach Anspruch 5, **dadurch gekennzeichnet, dass** der Reduktionsmittelstrom aus einem Luftmassenstrom in einem Ansaugrohr (7) der Brennkraftmaschine (1) und aus einem Sauerstoffgehalt des Abgases vor dem Speicherkatalysator (12') ermittelt wird.

7. Verfahren nach Anspruch 5 oder 6, **dadurch gekennzeichnet, dass** die Integration durch einen Abfall des Sauerstoffgehalts des Abgases vor dem Speicherkatalysator (12') von magerem auf fettes Kraftstoff/Luft-Gemisch begonnen wird.

8. Verfahren nach einem der Ansprüche 5 bis 7, **dadurch gekennzeichnet, dass** die Integration durch einen Abfall des Sauerstoffgehalts des Abgases nach dem Speicherkatalysator (12') von magerem auf fettes Kraftstoff/Luft-Gemisch beendet wird.

9. Steuergerät (18) für eine Brennkraftmaschine (1) insbesondere eines Kraftfahrzeugs, wobei die Brennkraftmaschine (1) einen Stickoxid (NOx)-Speicherkatalysator (12'), in den während einer ersten Betriebsphase Stickoxide einspeicherbar und während einer zweiten Betriebsphase eingespeicherte Stickoxide ausspeicherbar sind, und das Steuergerät (18) erste Mittel zum Ermitteln der während der ersten Betriebsphase eingespeicherten Menge an Stickoxiden, zweite Mittel zum Ermitteln einer die während der zweiten Betriebsphase ausgespeicherte Menge an Stickoxiden charakterisierenden Größe und dritte Mittel zum Vergleich der während der ersten Betriebsphase ermittelten eingespeicherten Menge an Stickoxiden mit der ermittelten Größe aufweist, **dadurch gekennzeichnet, dass** das Steuergerät (18) Mittel zum Abgleich eines dem Speicherkatalysator (12') nachgeordneten Abgassensors (14') mit Hilfe der während der zweiten Betriebsphase ermittelten Größe aufweist.

10. Steuergerät (18) nach Anspruch 9, **dadurch gekennzeichnet, dass** die Mittel zum Abgleich des Abgassensors (14') als ein Computerprogramm ausgebildet sind, das auf einem Rechengerät, insbesondere auf einem Mikroprozessor,;des Steuergeräts (18) ablauffähig und zur Ausführung sämtlicher Schritte eines Verfahrens nach einem der Ansprüche 1 bis 8 programmiert ist.

11. Brennkraftmaschine (1) insbesondere eines Kraftfahrzeugs, wobei die Brennkraftmaschine (1) einen Stickoxid (NOx) Speicherkatalysator (12'), in den während einer ersten Betriebsphase Stickoxide einspeicherbar und während einer zweiten Betriebsphase gespeicherte Stickoxide ausspeicherbar sind, und ein Steuergerät (18) mit ersten Mitteln zum Ermitteln der während der ersten Betriebsphase eingespeicherten Menge an Stickoxiden, zweiten Mitteln zum Ermitteln einer die während der zweiten Betriebsphase ausgespeicherten Menge an Stickoxiden charakterisierenden Größe und dritten Mitteln zum Vergleich der während der ersten Betriebsphase ermittelten eingespeicherten Menge an Stickoxiden mit der ermittelten Größe aufweist, **dadurch gekennzeichnet, dass** die Brennkraftmaschine ein Steuergerät (18) nach Anspruch 9 oder 10 aufweist.

12. Brennkraftmaschine (1) nach Anspruch 11, **dadurch gekennzeichnet, dass** die ersten Mittel einen dem Speicherkatalysator (12') nachgeordneten Abgassensor (14') umfassen.

13. Brennkraftmaschine (1) nach Anspruch 12, **dadurch gekennzeichnet, dass** der Abgassensor (14') als ein Stickoxid (NOx)-Sensor (14') ausgebildet ist.

14. Brennkraftmaschine (1) nach einem der Ansprüche 11 bis 13, **dadurch gekennzeichnet, dass** die zweiten Mittel einen Integrator zum Ermitteln einer während der zweiten Betriebsphase benötigten Menge an Reduktionsmittel durch Aufintegrieren eines Reduktionsmittelstroms über die Zeit umfassen.

15. Brennkraftmaschine (1) nach Anspruch 14, **dadurch gekennzeichnet, dass** die Brennkraftmaschine (1) einen Luftmassensensor oder Mittel zum Erfassen der Stellung einer in einem Ansaugrohr (7) angeordneten Drosselklappe (11) zum Ermitteln eines Luftmassenstroms und einen vor dem Speicherkatalysator (12') angeordneten Sauerstoff (O2) - Sensor (13) zum Erfassen des Sauerstoffgehalts des Abgases aufweist, wobei der Reduktionsmittelstrom aus dem Luftmassenstrom und dem Sauerstoffgehalt des Abgases ermittelt wird.

16. Brennkraftmaschine (1) nach Anspruch 14 oder 15, **dadurch gekennzeichnet, dass** ein Abfall des Sauerstoffgehalts des Abgases vor dem Speicherkatalysator (12') von magerem auf fettes Kraftstoff/Luft-Gemisch die Integration einleitet.

17. Brennkraftmaschine (1) nach einem der Ansprüche 14 bis 16, **dadurch gekennzeichnet, dass** ein Abfall des Sauerstoffgehalts des Abgases nach dem Speicherkatalysator (12') von magerem auf fettes Kraftstoff/Luft-Gemisch die Integration beendet.

## Claims

1. Method for operating a nitrogen oxide (NOx) storage catalytic converter (12') of an internal combustion engine (1), in particular of a motor vehicle, in which during a first operating phase of the storage catalytic converter (12') nitrogen oxides are stored in the storage catalytic converter (12') and during a second operating phase nitrogen oxides which have been stored are removed from the storage catalytic converter (12'), and in which during the first operating phase the quantity of nitrogen oxides which has been stored is determined and during the second operating phase a variable which characterizes the quantity of nitrogen oxides that has been removed is determined and is compared with the stored quantity of nitrogen oxides determined during the first operating phase, **characterized in that** an exhaust gas sensor (14') arranged downstream of the storage catalytic converter (12') is adjusted with the aid of the variable determined during the second operating phase.

2. Method according to Claim 1, **characterized in that** the quantity of nitrogen oxides stored during the first operating phase is determined with the aid of the exhaust gas sensor (14').

3. Method according to Claim 1 or 2, **characterized in that** the inclination of the characteristic curve of the exhaust gas sensor (14') is varied in order to adjust the exhaust gas sensor (14').

4. Method according to one of Claims 1 to 3, **characterized in that** the nitrogen oxides are removed from the storage catalytic converter (12') with the aid of a reducing agent, and the quantity of reducing agent required during the second operating phase is determined as the variable which characterizes the quantity of nitrogen oxides which is removed.

5. Method according to Claim 4, **characterized in that** the quantity of reducing agent which is required during the second operating phase is determined by integration of a reducing agent flow over time.

6. Method according to Claim 5, **characterized in that** the reducing agent flow is determined from an air mass flow in an induction pipe (7) of the internal combustion engine (1) and from an oxygen content of the exhaust gas upstream of the storage catalytic converter (12').

7. Method according to Claim 5 or 6, **characterized in that** the integration is commenced by a drop in the oxygen content of the exhaust gas upstream of the storage catalytic converter (12') from a lean fuel/air mix to a rich fuel/air mix.

8. Method according to one of Claims 5 to 7, **characterized in that** the integration is terminated by a drop in the oxygen content of the exhaust gas downstream of the storage catalytic converter (12') from a lean fuel/air mix to a rich fuel/air mix.

9. Control unit (18) for an internal combustion engine (1), in particular of a motor vehicle, the internal combustion engine (1) having a nitrogen oxide (NOx) storage catalytic converter (12'), in which nitrogen oxides can be stored during a first operating phase and from which stored nitrogen oxides can be removed during a second operating phase, and the control unit (18) having first means for determining the quantity of nitrogen oxides which were stored during the first operating phase, second means for determining a variable which characterizes the quantity of nitrogen oxides which was removed during the second operating phase, and third means for comparing the stored quantity of nitrogen oxides determined during the first operating phase with the determined variable, **characterized in that** the control unit (18) has means for adjusting an exhaust gas sensor (14') arranged downstream of the storage catalytic converter (12') with the aid of the variable determined during the second operating phase.

10. Control unit (18) according to Claim 9, **characterized in that** the means for adjusting the exhaust gas sensor (14') are in the form of a computer program which can run on a computer unit, in particular on a microprocessor, of the control unit (18) and is programmed to execute all the steps of a method according to one of Claims 1 to 8.

11. Internal combustion engine (1), in particular of a motor vehicle, the internal combustion engine (1) having a nitrogen oxide (NOx) storage catalytic converter (12'), in which nitrogen oxides can be stored during a first operating phase and from which stored nitrogen oxides can be removed during a second operating phase, and a control unit (18) having first means for determining the quantity of nitrogen oxides which were stored during the first operating phase, second means for determining a variable which characterizes the quantity of nitrogen oxides removed during the second operating phase, and third means for comparing the stored quantity of nitrogen oxides determined during the first operating phase with the determined variable, **characterized in that** the internal combustion engine has a control unit (18) according to Claim 9 or 10.

12. Internal combustion engine (1) according to Claim 11, **characterized in that** the first means comprise an exhaust gas sensor (14') arranged downstream of the storage catalytic converter (12').

13. Internal combustion engine (1) according to Claim 12, **characterized in that** the exhaust gas sensor (14') is designed as a nitrogen oxide (NOx) sensor (14').

14. Internal combustion engine (1) according to one of Claims 11 to 13, **characterized in that** the second means comprise an integrator for determining a quantity of reducing agent required during the second operating phase by integrating a reducing agent flow over time.

15. Internal combustion engine (1) according to Claim 14, **characterized in that** the internal combustion engine (1) has an air mass sensor or means for recording the position of a throttle valve (11) arranged in an induction pipe (7) in order to determine an air mass flow, and an oxygen (02) sensor (13), arranged upstream of the storage catalytic converter (12'), for recording the oxygen content of the exhaust gas, the reducing agent flow being determined from the air mass flow and the oxygen content of the exhaust gas.

16. Internal combustion engine (1) according to Claim 14 or 15, **characterized in that** a drop in the oxygen content of the exhaust gas upstream of the storage catalytic converter (12') from a lean fuel/air mix to a rich fuel/air mix initiates the integration.

17. Internal combustion engine (1) according to one of Claims 14 to 16, **characterized in that** a drop in the oxygen content of the exhaust gas downstream of the storage catalytic converter (12') from a lean fuel/air mix to a rich fuel/air mix terminates the integration.

## Revendications

1. Procédé de fonctionnement d'un catalyseur accumulateur d'oxydes d'azote (NOx) (12') d'un moteur à combustion interne (1), en particulier d'un véhicule automobile, selon lequel on accumule des oxydes d'azote dans le catalyseur accumulateur (12') pendant une première phase de fonctionnement du catalyseur accumulateur (12') et on élimine les oxydes d'azote accumulés du catalyseur accumulateur (12') pendant une deuxième phase de fonctionnement, et on détermine pendant la première phase de fonctionnement la quantité d'oxydes d'azote accumulée et pendant la deuxième phase de fonctionnement une grandeur caractérisant la quantité d'oxydes d'azote éliminée, que l'on compare avec la quantité d'oxydes d'azote accumulée déterminée pendant la première phase de fonctionnement,
**caractérisé en ce qu'**
à l'aide de la grandeur déterminée pendant la deuxième phase de fonctionnement, on effectue un étalonnage d'un détecteur de gaz d'échappement (14') installé après le catalyseur accumulateur (12').

2. Procédé selon la revendication 1,
**caractérisé en ce qu'**
on détermine la quantité d'oxydes d'azote accumulée pendant la première phase de fonctionnement à l'aide du détecteur de gaz d'échappement (14').

3. Procédé selon la revendication 1 ou 2,
**caractérisé en ce qu'**
on fait varier la pente de la courbe caractéristique du détecteur de gaz d'échappement (14') pour opérer l'étalonnage du détecteur de gaz d'échappement (14').

4. Procédé selon l'une quelconque des revendications 1 à 3,
**caractérisé en ce qu'**
on élimine les oxydes d'azote du catalyseur accumulateur (12') à l'aide d'un agent réducteur et on détermine la quantité d'agent réducteur nécessaire pendant la deuxième phase de fonctionnement comme grandeur caractérisant la quantité d'oxydes d'azote éliminée.

5. Procédé selon la revendication 4,
**caractérisé en ce qu'**
on détermine la quantité d'agent réducteur nécessaire pendant la deuxième phase de fonctionnement par une intégration d'un débit d'agent réducteur par rapport au temps.

6. Procédé selon la revendication 5,
**caractérisé en ce qu'**
on détermine le débit d'agent réducteur à partir d'un courant massique d'air dans une tubulure d'admission (7) du moteur à combustion interne (1) et à partir d'une teneur en oxygène des gaz d'échappement avant le catalyseur accumulateur (12').

7. Procédé selon la revendication 5 ou 6,
**caractérisé en ce qu'**
on commence l'intégration par une baisse de la teneur en oxygène des gaz d'échappement avant le catalyseur accumulateur (12'), le mélange carburant/ air passant de pauvre à riche.

8. Procédé selon l'une quelconque des revendications 5 à 7,
**caractérisé en ce qu'**
on termine l'intégration par une baisse de la teneur en oxygène des gaz d'échappement après le catalyseur accumulateur (12'), le mélange carburant/air passant de pauvre à riche.

9. Dispositif de commande (18) pour un moteur à combustion interne (1), en particulier d'un véhicule automobile, le moteur à combustion interne (1) présentant un catalyseur accumulateur d'oxydes d'azote (NOx) (12'), dans lequel des oxydes d'azote peuvent s'accumuler pendant une première phase de fonctionnement et les oxydes d'azote accumulés peuvent être éliminés pendant une deuxième phase de fonctionnement, et le dispositif de commande (18) présentant des premiers moyens pour déterminer la quantité d'oxydes d'azote accumulée pendant la première phase de fonctionnement, des deuxièmes moyens pour déterminer une grandeur caractérisant la quantité d'oxydes d'azote éliminée pendant la deuxième phase de fonctionnement, et des troisièmes moyens pour comparer la quantité d'oxydes d'azote accumulée déterminée pendant la première phase de fonctionnement avec la grandeur déterminée,
**caractérisé en ce que**
le dispositif de commande (18) présente des moyens pour étalonner un détecteur de gaz d'échappement (14') installé après le catalyseur accumulateur (12') à l'aide de la grandeur déterminée pendant la deuxième phase de fonctionnement.

10. Dispositif de commande (18) selon la revendication 9,
**caractérisé en ce que**
les moyens pour étalonner le détecteur de gaz d'échappement (14') sont réalisés sous la forme d'un programme informatique, qui peut être exécuté sur un calculateur, en particulier sur un microprocesseur, du dispositif de commande (18) et qui est programmé pour exécuter toutes les étapes d'un procédé selon l'une quelconque des revendications 1 à 8.

11. Moteur à combustion interne (1), en particulier d'un véhicule automobile, le moteur à combustion interne (1) présentant un catalyseur accumulateur d'oxydes d'azote (NOx) (12'), dans lequel des oxydes d'azote peuvent s'accumuler pendant une première phase de fonctionnement et les oxydes d'azote accumulés peuvent être éliminés pendant une deuxième phase de fonctionnement, et un dispositif de commande (18) comprenant des premiers moyens pour déterminer la quantité d'oxydes d'azote accumulée pendant la première phase de fonctionnement, des deuxièmes moyens pour déterminer une grandeur caractérisant la quantité d'oxydes d'azote éliminée pendant la deuxième phase de fonctionnement, et des troisièmes moyens pour comparer la quantité d'oxydes d'azote accumulée déterminée pendant la première phase de fonctionnement avec la grandeur déterminée,
**caractérisé en ce que**
le moteur à combustion interne (1) présente un dispositif de commande (18) selon la revendication 9 ou 10.

12. Moteur à combustion interne (1),
**caractérisé en ce que**
les premiers moyens comprennent un détecteur de gaz d'échappement (14') installé après le catalyseur accumulateur (12').

13. Moteur à combustion interne (1) selon la revendication 12,
**caractérisé en ce que**
le détecteur de gaz d'échappement (14') est réalisé sous la forme d'un détecteur d'oxydes d'azote (NOx) (14').

14. Moteur à combustion interne (1) selon l'une quelconque des revendications 11 à 13,
**caractérisé en ce que**
les deuxièmes moyens comprennent un intégrateur pour déterminer une quantité d'agent réducteur nécessaire pendant la deuxième phase de fonctionnement par intégration d'un débit d'agent réducteur par rapport au temps.

15. Moteur à combustion interne (1) selon la revendication 14,
**caractérisé en ce que**
le moteur à combustion interne (1) présente un détecteur de masse d'air ou des moyens pour déterminer la position d'un clapet d'étranglement (11) disposé dans une tubulure d'admission (7) pour déterminer un débit massique d'air et un détecteur d'oxygène (02) (13) disposé avant le catalyseur accumulateur (12') pour détecter la teneur en oxygène des gaz d'échappement, le débit d'agent réducteur étant déterminé à partir du débit massique d'air et de la teneur en oxygène des gaz d'échappement.

16. Moteur à combustion interne (1) selon la revendication 14 ou 15,
**caractérisé en ce qu'**
une baisse de la teneur en oxygène des gaz d'échappement avant le catalyseur accumulateur (12'), le mélange carburant/air passant de pauvre à riche, fait commencer l'intégration.

17. Moteur à combustion interne (1) selon l'une quelconque des revendications 14 à 16,
**caractérisé en ce qu'**
une baisse de la teneur en oxygène des gaz d'échappement après le catalyseur accumulateur (12'), le mélange carburant/air passant de pauvre à riche, met fin à l'intégration.
